# EUROPÄISCHE PATENTSCHRIFT

(11) **EP 3 188 886 B1**
(45) Veröffentlichungstag und Bekanntmachung des Hinweises auf die Patenterteilung: **25.04.2018**
(21) Anmeldenummer: 15762476.8
(22) Anmeldetag: 04.08.2015
(51) Int. Cl.: B29C 45/33

(54) **EINE POLY-V RIEMENSCHEIBE UND KUNSTSTOFF-SPRITZGIESSVERFAHREN ZUR HERSTELLUNG EINER POLY-V RIEMENSCHEIBE**
A POLY-V PULLEY AND PLASTIC INJECTION MOULDING METHOD FOR MANUFACTURING A POLY-V PULLEY
UNE POLY-V POULIE ET PROCÉDÉ DE MOULAGE PAR INJECTION EN MATIÈRE PLASTIQUE POUR LA FABRICATION D'UNE POLY-V POULIE

(30) Priorität: 02.09.2014 DE 102014217491
(43) Veröffentlichungstag der Anmeldung: 12.07.2017
(73) Patentinhaber: Schaeffler Technologies AG & Co. KG, 91074 Herzogenaurach (DE)
(72) Erfinder: WETZ, Bernd, 91483 Oberscheinfeld (DE); DILLER, Katrin, 91085 Weisendorf (DE)
(86) Internationale Anmeldenummer: PCT/DE2015/200434
(87) Internationale Veröffentlichungsnummer: WO 2016/034175

(56) Entgegenhaltungen:
- EP-A2- 2 175 169
- US-A1- 2010 052 412
- US-A1- 2010 184 548

## Beschreibung

Die Erfindung betrifft ein Kunststoff-Spritzgießverfahren zur Herstellung einer Poly-V-Riemenscheibe und eine nach diesern Verfahren hergestellte Riemenscheibe Diese weist einen äußeren Ring, einen inneren Ring und einen den äußeren Ring mit dem inneren Ring verbindenden Ringsteg mit einer Vielzahl von radial orientierten Rippen zur Abstützung des äußeren Rings gegen den inneren Ring auf. Das Spritzgießen erfolgt in einer zylindrischen Spritzgießkavität, deren poly-V-gerippter Innenmantel durch eine Vielzahl von radial verfahrbaren Schiebern gebildet ist und die sich während des Spritzgießens über die Trennfugen zwischen den aneinander angrenzenden Schiebern entlüftet.

Derartige Riemenscheiben werden üblicherweise in Riementrieben von Brennkraftmaschinen zum Spannen oder Umlenken eines Poly-V-Riemens (auch als Keilrippenriemen bezeichnet) eingesetzt. Die Herstellung erfolgt durch Kunststoffumspritzung des Außenrings eines Kugellagers, durch die Riemenscheibe drehbar an der Brennkraftmaschine gebaltert ist - siehe beispielsweise US 8,617,016 B2 oder EP 2 175 169 A2. Die Entformbarkeit des poly-V-gerippten Laufmantels der Riemenscheibe aus dem Spritzgießwerlzeug erfordert radial verfahrbare Schieber, die im geschlossenen Zustand den entsprechend gerippten Innenmantel der Spritzgießkavität bilden.

Die bei der Umspritzung erforderliche Entlüftung der Kavität erfolgt durch die Trennfugen zwischen den Schiebern. Bei der Dimensionierung der Trennfugen besteht jedoch der folgende Zielkonfükt: bei einer kleinen Trennfuge besteht das Risiko von Lufteinschlüssen in der Kavität, insbesondere im Bereich von deren axialen Stirnseiten und umfänglich zwischen den Trennfugen, und mithin von Brandstellen, die die Werkzeugstandzeit mindern. Dieses Risiko nimmt mit der Breite der Reimenscheibe zu und führt besonders bei Rippenprofilen PK5, PK6 und breiter zu einem unakzeptablen Werkzeugverchleiß. Eine Vergrößerung der Trennfuge begünstigt nun zwar die Entlüftung, beeinträchtigt aber die Rundheit des gerippten Riemenscheiben-Laufmantels infolge der hohen Werkstoffansammlung an der Trennfuge mit entsprechend unzulässiger Gratbildung.

Der Erfindung liegt die Aufgabe zugrunde, ein im Hinblick auf das Füllverhalten und die Entlüftung der Spritzgießkavität verbessertes Kunststoff-Spritzgießverfahren zur Herstellung einer Poly-V-Riemenscheibe der eingangs genannten Art anzugeben.

Die Lösung dieser Aufgabe ergibt sich aus den Merkmalen des Verfahrensanspruchs 1. Demnach soll die Rippenkontur in der Spritzgießkavität derart ausgebildet sein, dass die Vielzahl der Rippen aus einer ersten Gruppe dünner Rippen und einer zweiten Gruppe dicker Rippen besteht und dass die Trennfugen in radialer Verlängerung der dünnen Rippen verlaufen, deren Breite wesentlich kleiner als die Breite der dicken Rippen ist, die umfänglich zwischen den Trennfugen verlaufen. Die relativ kleine Breite der dünnen Rippen, die mit den Trennfugen radial fluchten, verhindert die Bildung der nachteiligen Lufteinschlüsse in den Bereichen der Spritzgießkavität, die umfänglich zwischen den Trennfugen verlaufen. Vielmehr füllen sich diese Bereiche zuerst mit der Kunststoffschmelze, die die dort befindliche Luft in Richtung der Trennfugen verdrängt. Auf eine die unerwünschte Gratbildung am Laufmantel der Riemenscheibe begünstigende Vergrößerung der Trennfuge kann somit verzichtet werden.

Das auf diese Weise verbesserte Füllverhalten der Spritzgießkavität, das den eingangs erläuterten Zielkonflikt wesentlich entschärft, wurde durch eine Moldflow-Analyse bestätigt. Dabei stellten sich auch folgende Parameter als bevorzugte Ausgestaltungen der Erfindung bzw. einer nach dem erfindungsgemäßen Verfahren hergestellten Riemenscheibe heraus:
Bei stirnseitiger Anspritzung der Spritzgießkavität sollen die Anzahl der Anspritzpunkte und die Anzahl der Schieber identisch sein. Insbesondere soll für die Anzahl i der Anspritzpunkte und die Anzahl s der Schieber gelten. i=s=9 oder i=s=11. Die Anzahl r der Rippen soll ungerade sein und das Dreifache der Schieberanzahl betragen, insbesondere also r=27 bzw. r=33. In diesem Fall sind die Anspritzpunkte jeweils zwischen zwei relativ breiten dicken Rippen, d.h. im umfänglich mittigen Bereich der Schieber positioniert. Die Rippen sollen so dimensioniert sein, dass die Breite w1 der mit den Trennfugen fluchtenden, dünnen Rippen höchstens 80% der Breite w2 der dazwischen verlaufenden dicken Rippen beträgt: w1/w2<0,8.

Weitere Merkmale der Erfindung ergeben sich aus der nachfolgenden Beschreibung und aus den Zeichnungen, in denen eine nach dem erfindungsgemäßen Verfahren hergestellte Riemenscheibe für einen Nebenaggregate-Riementrieb einer Brennkraftmaschine dargestellt ist. Es zeigen:
- Figur 1: die Riemenscheibe in Draufsicht in Verbindung mit dem stark schematisch dargestellten Spritzgießwerkzeug;
- Figur 2: das Detail X aus Figur 1;
- Figur 3: eine bekannte Riemenscheibe in perspektivischer Ansicht;
- Figur 4: die bekannte Riemenscheibe im Längsschnitt.

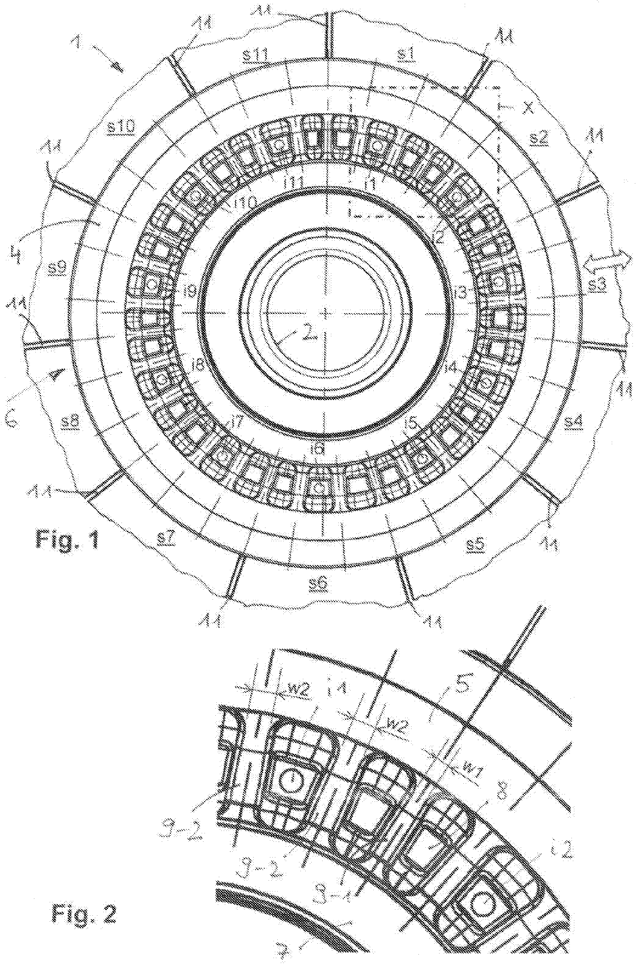

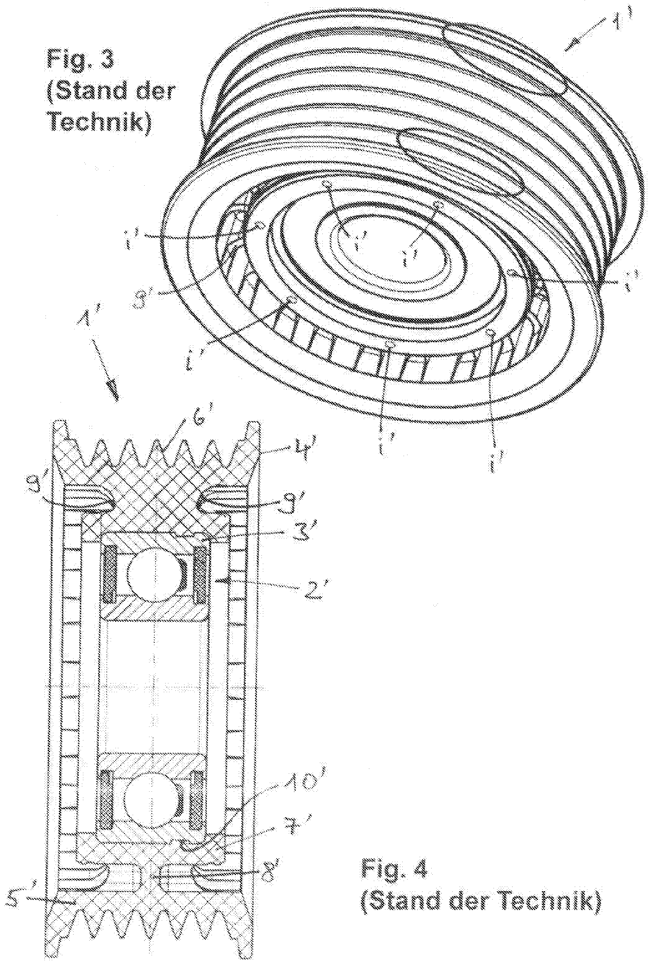

Die in den Figuren 3 und 4 dargestellte Riemenscheibe 1' verdeutlicht das grundsätzliche Design der erfindungsgemäß hergestellten Riemenscheibe 1, die in Figur 1 lediglich in der für das Verständnis der Erfindung wesentlichen Draufsicht dargestellt ist. Die bekannte Riemenscheibe 1' besteht aus einem beidseitig abgedichteten, einreihigen Kugellager 2', dessen Lageraußenring 3' mit einer aus Kunststoff bestehenden Laufscheibe 4' für den Eingriff mit einem Poly-V-Riemen umspritzt ist. Dies erfolgt auf der Stirnseite der Riemenscheibe 1', wie es anhand der zugehörigen Anspritzpunkte i' erkennbar ist.

Die aus Polyamid PA66 mit 25% Glasfaserverstärkung bestehende Laufscheibe 4' setzt sich geometrisch aus einem äußeren Ring 5' mit dem hier als PK6 poly-V-gerippten Laufmantel 6', einem inneren Ring 7', einem die beiden Ringe 5' und 7' verbindenden Ringsteg 8' und einer Vielzahl von radial orientierten Rippen 9' zusammen, die auf beiden Seiten des Ringstegs 8' ausgebildet sind und den äußeren Ring 5' gegen den inneren Ring 7' abstützen. Der innere Ring 7' umschließt den -Lageraußenring 3' an dessen zylindrischer Mantelfläche und verkrallt sich auf bekannte Weise in einer darin umlaufenden, gerändelten Nut 10'.

Die erfindungsgemäße Kunststoffumspritzung des Kugellagers 2 zur Herstellung der in den Figuren 1 und 2 dargestellten Riemenscheibe 1 erfolgt in einem Spritzgießwerkzeug mit einer der Laufscheibe 4 entsprechenden kreisringförmigen Spritzgießkavität, deren poly-V-gerippter Innenmantel durch eine Vielzahl s von gleichmäßig umfangsverteilten Schiebern s1 bis s11 gebildet ist. Wie durch den Pfeil beim Schieber s3 angedeutet, sind die Schieber s1 bis s11 zwecks Entformbarkeit des entsprechend poly-V-gerippten Laufmantels 6 radial verfahrbar, wobei die Spritzgießkavität bei eingefahrenen Schiebern s1 bis s11 geschlossen ist und sich während des Füllvorgangs über die Trennfugen 11 zwischen den aneinander angrenzenden Schiebern s1 bis s11 entlüftet. Durch die nachfolgend erläuterte Ausbildung der Spritzgießkavität erfolgt diese Entlüftung weitestgehend vollständig, so dass sowohl im Werkzeug als auch im Werkstück verbleibende Lufteinschlüsse verhindert werden. Wie eingangs erwähnt, treten solche Lufteinschlüsse bei bekannten Spritzgießverfahren typischerweise an den oben in Figur 3 eingekreisten Bereichen jeweils im Umfangsbereich der Schieber auf.

Die Anspritzung des Kunststoffs in die Spritzgießkavität erfolgt stirnseitig über einen Verteiler mit einer Vielzahl i von Anspritzpunkten i1 bis i11, die mit der Vielzahl s der Schieber s1 bis s11 identisch ist, d.h. i=s=11. Die Vielzahl i der Rippen 9, die zwecks verringerter Geräuschentwicklung der rotierenden Riemenscheibe 1 mit ungleichmäßiger Winkelverteilung radial orientiert sind, ist ungerade und beträgt das Dreifache davon, d.h. r=33. Die Rippenkontur in der Spritzgießkavität ist so ausgebildet, dass zum einen die darin geformten Rippen 9 aus einer ersten Gruppe dünner Rippen 9-1 und aus einer zweiten Gruppe dicker Rippen 9-2 bestehen. Dabei ist die Breite der dünnen Rippen 9-1 mit w1=1,5mm wesentlich kleiner als die Breite der dicken Rippen 9-2 mit w2=2mm, d.h. das Verhältnis w1/w2=0,75. Zum anderen ist in der umfänglichen Reihenfolge genau jede dritte Rippe eine der dünnen Rippen 9-1, in deren radialer Verlängerung (nach außen) die Trennfugen 11 verlaufen. Die dicken Rippen 9-2 verlaufen umfänglich zwisehen den Trennfugen 11.

Die Anspritzpunkte i1 bis i11 sind jeweils zwischen zwei unmittelbar benachbarten, dicken Rippen 9-2 auf dem Ringsteg 8 positioniert, der den äußeren Ring 5 mit dem inneren Ring 7 verbindet. Wie es bei der bekannten Riemenscheibe gemäß Figur 3 der Fall ist, können die Anspritzpunkte bei unveränderten Umfangswinkeln alternativ auch auf dem inneren Ring 7 positioniert sein.

## Patentansprüche

1. Kunststoff-Spritzgeißverfahren zur Herstellung einer Poly-V-Riemenscheibe (1), die einen äußeren Ring (5), einen inneren Ring (7) und einen den äußeren Ring (5) mit dern inneren Ring (7) verbindenden Ringsteg (8) mit einer Vielzahl (r) von radial orientierten Rippen (9) zur Abstützung des äußeren Rings (5) gegen den inneren Ring (7) aufweist, wobei das Spritzgießen in einer kreisringförmigen Spritzgießkavität erfolgt, deren poly-V-gerippter Innenmantel durch eine Vielzahl (s) von radial verfahrbaren Schiebern (s1 bis s11) gebildet ist und die sich während des Spritzgießbens über die Trennfugen (11) zwischen den aneinander angrenzenden Schiebern (s1 bis s11) entlüftet, **gekennzeichnet durch** die Ausbildung der Rippenkontur in der Spritzgießkavität derart, dass die Vielzahl (r) der Rippen (9) aus einer ersten Gruppe dünner Rippen (9-1) und einer zweiten Gruppe dicker Rippen (9-2, besteht und dass die Trennfugen (11) in radialer Verlängerung der dünnen Rippen (9-1) verlaufen, deren Breite (w1) wesentlich kleiner als die Breite (w2) der dicken Rippen (9-deren Breite (w1) wesentlich Kleiner als die Breite (w2) der dicken Rippen (9-2) ist, die umfänglich zwischen den Trennfugen (11) verlaufen.

2. Kunststoff-Spritzgießverfahren nach Anspruch 1, **gekennzeichnet durch** eine steirnseitige Anspritzung der Spritzgießavität über einen Verteiler mit einer Vielzahl (i) von Anspritzpunkten (i1 bis i11), wobei für die Vielzahl (i) der Anspritzpunkte (i1 bis i11) und die Vielzahl (s) der Schieber (s1 bis s11) gilt: j=s.

3. Kunststoff-Spritzgießverfahren nach Anspruch 2, **dadurch gekennzeichnet, dass** für die Vielzahl (r) der Rippen (9) und die Vielzahl (s) der Schieber (s1 bis s11) gilt: r=3s, wobei die Anspritzpunkte (i1 bis i11) jeweils zwischen zwei unmittelbar benachbarten dicken Rippen (9-2) positioniert sind.

4. Kunststoff-Spritzgießverfahren nach Anspruch 3, **dadurch gekennzeichnet, dass** für die Vielzahl (i) der Anspritzpunkte (i1 bis i11) gilt: i=9 oder i=11.

5. Poly-V-Riemenscheibe (1) erhältlich durch ein Verfahren nach einem der vorhergehenden Ansprüche, **dadurch gekennzeichnet, dass** für die Breite (w1) der dünnen Rippen (9-1) und die Breite (w2) der dicken Rippen (9-2) das Verhältnis gilt: w1/w2>0,8.

6. Poly-V-Riemenscheibe (1) nach Anspruch 5, **dadurch gekennzeichnet, dass** die Vielzahl (r) der Rippen (9) ungerade ist.

7. Poly-V-Riemenscheibe (1) nach Anspruch 6, **dadurch gekennzeichnet, dass** für die Vielzahl (r) der Rippen (9) gilt: r=27 oder r=33, wobei genau jede dritte Rippe eine der dünnen Rippen (9-1) ist.

## Claims

1. Plastics injection-moulding method for manufacturing a poly-V belt pulley (1), which has an outer ring (5), an inner ring (7) and a ring web (8), which connects the outer ring (5) to the inner ring (7) and has a plurality (r) of radially oriented ribs (9) for supporting the outer ring (5) against the inner ring (7), wherein the injection moulding takes place in a circular ring-shaped injection-moulding cavity, the poly-V-ribbed inner shell of which is formed by a plurality (s) of radially movable slides (s1 to s11) and which is vented during the injection moulding by means of the gaps (11) between the slides (s1 to s11) adjacent to one another, **characterized by** the forming of the rib contour in the injection moulding cavity in such a way that the plurality (r) of ribs (9) consists of a first group of thin ribs (9-1) and a second group of thick ribs (9-2) and in that the gaps (11) extend in radial extension of the thin ribs (9-1), the width (w1) of which is significantly less than the width (w2) of the thick ribs (9-2), which extend circumferentially between the gaps (11).

2. Plastics injection-moulding method according to Claim 1, **characterized by** an end-side injection into the injection-moulding cavity via a runner with a plurality (i) of injection points (i1 to i11), wherein the following applies for the plurality (i) of injection points (i1 to i11) and the plurality (s) of slides (s1 to s11): i=s.

3. Plastics injection-moulding method according to Claim 2, **characterized in that** the following applies for the plurality (r) of ribs (9) and the plurality (s) of slides (s1 to s11): r=3s, wherein the injection points (i1 to i11) are positioned in each case between two directly adjacent neighbouring thick ribs (9-2).

4. Plastics injection-moulding method according to Claim 3, **characterized in that** the following applies for the plurality (i) of injection points (i1 to i11): i=9 or i=11.

5. Poly-V belt pulley (1) obtainable by a method according to one of the preceding claims, **characterized in that** the following applies for the width (w1) of the thin ribs (9-1) and the width (w2) of the thick ribs (9-2): w1/w2<0.8.

6. Poly-V belt pulley (1) according to Claim 5, **characterized in that** the plurality (r) of ribs (9) is an odd number.

7. Poly-V belt pulley (1) according to Claim 6, **characterized in that** the following applies for the plurality (r) of ribs (9): r=27 or r=33, wherein exactly every third rib is one of the thin ribs (9-1).

## Revendications

1. Procédé de moulage par injection de plastique pour la fabrication d'une poulie à courroie poly-V (1), qui présente une bague externe (5), une bague interne (7) et une nervure annulaire (8) reliant la bague externe (5) à la bague interne (7) avec une pluralité (r) de nervures orientées radialement (9) pour supporter la bague externe (5) contre la bague interne (7), le moulage par injection s'effectuant dans une cavité de moulage par injection de forme annulaire circulaire dont l'enveloppe intérieure pourvue de nervures poly-V est formée par une pluralité (s) de disques déplaçable radialement (s1 à s1) et qui est désaérée pendant le moulage par injection par le biais des joints de séparation (11) entre les disques mutuellement adjacents (s1 à s11), **caractérisé par** la réalisation du contour nervuré dans la cavité de moulage par injection de telle sorte que la pluralité (r) de nervures (9) soient constituées d'un premier groupe de nervures plus minces (9-1) et d'un deuxième groupe de nervures plus épaisses (9-2) et que les joints de séparation (11) s'étendent dans le prolongement radial des nervures minces (9-1), dont la largeur (w1) est considérablement inférieure à la largeur (w2) des nervures épaisses (9-2) qui s'étendent sur le pourtour entre les joints de séparation (11).

2. Procédé de moulage par injection de plastique selon la revendication 1, **caractérisé par** une injection directe frontale de la cavité de moulage par injection par le biais d'un distributeur ayant une pluralité (i) de points d'injection (il à i11), où, pour la pluralité (i) des points d'injection (il à i11) et la pluralité (s) des disques (s1 à sll), l'on a la relation i=s.

3. Procédé de moulage par injection de plastique selon la revendication 2, **caractérisé en ce que** pour la pluralité (r) des nervures (9) et la pluralité (s) des disques (s1 à sll), l'on a : r=3s, les points d'injection (il à i11) étant à chaque fois positionnés entre deux nervures épaisses immédiatement adjacentes (9-2).

4. Procédé de moulage par injection de plastique selon la revendication 3, **caractérisé en ce que** pour la pluralité (i) des points d'injection (il à i11), on a : i=9 ou i=11.

5. Poulie à courroie poly-V (1) pouvant être obtenue par un procédé selon l'une quelconque des revendications précédentes, **caractérisée en ce que** pour la largeur (w1) des nervures minces (9-1) et la largeur (w2) des nervures épaisses (9-2), on a le rapport suivant : w1/w2<0,8.

6. Poulie à courroie poly-V (1) selon la revendication 5, **caractérisée en ce que** la pluralité (r) de nervures (9) est impaire.

7. Poulie à courroie poly V (1) selon la revendication 6, **caractérisée en ce que** pour la pluralité (r) des nervures (9), on a : r=27 ou r=33, une nervure sur trois exactement étant l'une des nervures minces (9-1).
